# EUROPÄISCHE PATENTSCHRIFT

(11) **EP 2 935 436 B1**
(45) Veröffentlichungstag und Bekanntmachung des Hinweises auf die Patenterteilung: **30.01.2019**
(21) Anmeldenummer: 13811192.7
(22) Anmeldetag: 18.12.2013
(51) Int. Cl.: C08K 5/00, C08K 5/521, C08K 3/00, C08L 69/00

(54) **GEDECKT EINGEFÄRBTE POLYCARBONAT FORMMASSEN ENTHALTEND IR-REFLEKTIERENDE PIGMENTE**
OPAQUELY COLOURED POLYCARBONATE MOULDINGS CONTAINING IR REFLECTANT PIGMENTS
MATIÈRES DE MOULAGE EN POLYCARBONATE PIGMENTÉE DE FAÇON OPAQUE CONTENANT DES PIGMENTS RÉFLECTANT L'IR

(30) Priorität: 20.12.2012 EP 12198349
(43) Veröffentlichungstag der Anmeldung: 28.10.2015
(73) Patentinhaber: Covestro Deutschland AG, 51373 Leverkusen (DE)
(72) Erfinder: MEYER, Alexander, 40489 Düsseldorf (DE); REICHENAUER, Joerg, 47802 Krefeld (DE); OSER, Rafael, 47800 Krefeld (DE)
(74) Vertreter: Levpat
(86) Internationale Anmeldenummer: PCT/EP2013/077020
(87) Internationale Veröffentlichungsnummer: WO 2014/095954

(56) Entgegenhaltungen:
- EP-A1- 0 205 192
- EP-A1- 1 857 424
- WO-A1-2007/067462
- WO-A1-2011/038842
- WO-A1-2011/144429
- DE-U1-202012 005 548

## Beschreibung

Die Erfindung betrifft gedeckt eingefärbte, infrarotreflektierende Polycarbonat-Formmassen mit hoher Schmelzestabilität in Kombination mit einer hohen Reflektivität im IR-Bereich und einer guten Bewitterungsstabiliät, enthaltend mindestens ein IR-reflektierendes anorganisches Pigment und mindestens einen Stabilisator sowie die Herstellung und Verwendung der erfindungsgemäßen Polymer-Zusammensetzungen und die daraus hergestellten Erzeugnisse, insbesondere Mehrschichtkörper.

Die Erfindung betrifft ferner die Verwendung der erfindungsgemäßen Polymerzusammensetzung zur Herstellung von Dächern, Blenden, Verkleidungen, Rahmen insbesondere für den Einsatz in Gebäuden, Kraftfahrzeugen und Schienenfahrzeugen.

Die erfindungsgemäßen Formmassen aus Polycarbonat können ferner als Coextrusionsschichten oder Deckschichten auf Thermoplasten, z.B. Polycarbonat oder Polymethyl(meth)acrylat, eingesetzt werden oder als Deckschicht beim Hinterspritzen.

Auch hier können sie in entsprechenden Anwendungen, wie z.B. bei Bauanwendungen, wie Regenrohre und Fensterrahmen, Automobilanwendungen, wie Dachmodule, Abdeckungen im Aussen- und Innenbereich (Blenden), Spoiler und Spiegelgehäuse, zum Einsatz kommen.

Unter "gedeckt eingefärbt" versteht man im Sinne der vorliegenden Erfindung Materialien, die nicht transparent sind. Insbesondere sind hiermit Formmassen gemeint, die eine Lichttransmission von weniger als 1 % aufweisen.

Die vorliegende Erfindung betrifft ferner Mehrschichtkörper, umfassend:
a) eine Substratschicht, enthaltend
   a1) Polycarbonat,
   a2) mindestens ein IR-reflektierendes Pigment, ausgewählt aus der Gruppe, bestehend aus:
      - Pigment Braun 29; Chrom-Eisenoxid (CAS-Nr. 12737-27-8), (Fe,Cr)₂O₃
      - Pigment Blau 28, Cobaltaluminat Blau Spinell, (CAS-Nr. 1345-16-0)
      - Pigment Blau 36, Cobaltchromit Blau Spinell, (CAS-Nr. 68187-11-1) und
      - deren Mischungen,
      in einem Anteil von 0,35 bis 4,0 Gew.-%
   a3) mindestens einen Stabilisator auf Phosphatbasis mit folgender Struktur (1) 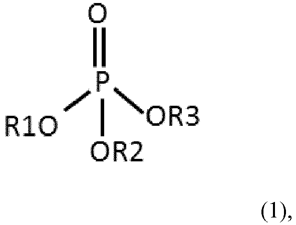
   wobei R1 bis R3 H, gleiche oder unterschiedliche lineare, verzweigte oder zyklische Alkylreste sind, wobei a3) in einem positiven Anteil von weniger als 0,05 Gew.-% vorliegt, und
b) mindestens eine Deckschicht aus
   b1) einem transparenten thermoplastischen Material oder
   b2) einem transparenten nicht-thermoplastischen Material.

Die Deckschicht ist vorzugsweise eine SiO₂-basierende Kratzfestschicht.
c) Optional umfasst der Mehrschichtkörper eine Primerschicht, vorzugsweise angeordnet zwischen Deckschicht und Substratschicht.

In einer bevorzugten Ausführungsform besteht der Mehrschichtkörper aus den Schichten a) und b), in der die Schichten a) und b) unmittelbar miteinander verbunden sind.

In einer weiter bevorzugten Ausführungsform besteht der Mehrschichtkörper aus den Schichten a), b) und c), wobei die Schicht c) zwischen den Schichten a) und b) angeordnet ist.

Im Rahmen der vorliegenden Erfindung können bevorzugte Ausführungsformen auch miteinander kombiniert werden.

Die aus den erfindungsgemäßen Zusammensetzungen erhaltenen Formteile bieten für den Einsatz im Fahrzeugbereich viele Vorteile gegenüber herkömmlichen Materialien, wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Kfz-Außenteile, die im Kraftfahrzeug-, Schienenfahrzeug- und Luftfahrzeug- bzw. im Infrastrukturbereich eingesetzt werden, müssen zudem eine lange Lebensdauer aufweisen und dürfen während dieser nicht verspröden oder Farbe und Oberfläche (Glanzeffekt) mehr als nur geringfügig verändern. Ferner müssen die thermoplastischen Teile über eine ausreichende Kratzfestigkeit verfügen.

Da die Bauteile für den Infrastruktur- oder Transportbereich relativ groß sein können und eine komplexe Geometrie aufweisen können, muss das thermoplastische Material eine ausreichende Fließfähigkeit aufweisen, um im Spritzgussprozess, wie z.B. speziell dem Spritzprägeverfahren, zu entsprechenden Formkörpern verarbeitet werden zu können.

### Stand der Technik:

IR-reflektierende Zusammensetzungen aus Thermoplasten, enthaltend IR-reflektierende Pigmente, sind prinzipiell bekannt.

In DE 102004058083 werden gedeckt eingefärbte Zusammensetzungen auf Basis von PMMA mit hoher Reflektivität im IR-Bereich beschrieben. Diese Zusammensetzungen sind jedoch nicht auf Polycarbonat übertragbar, da sie eine ungenügende Schmelzestabilität aufweisen.

In WO 2011/144429 werden Beschichtungssysteme mit hoher Reflexion im IR-Bereich, vorzugsweise auf PMMA-Basis, beschrieben, die jedoch die Auswahl der IR-reflektierenden Elemente in Verbindung mit einem Stabilisator nicht beschreiben.

In DE 102007061052 werden Zusammensetzungen aus speziellen Farbmitteln auf Basis unterschiedlicher Thermoplaste beschreiben, die eine Reflexion im IR-Bereich aufweisen, wobei die verwendeten IR-reflektierende Pigmente in Polycarbonat unwirksam sind.

Es ist somit dem Stand der Technik nicht zu entnehmen, welche IR-reflektierenden Additive sich für den Einsatz in Polycarbonat eignen.

In WO 2010/037071 werden Polymerzusammensetzungen, enthaltend Titandioxid und weitere Farbmittel, beschrieben, wobei sich wie oben diese Pigmente nicht für den Einsatz in Polycarbonat eignen.

In DE 102006029613 werden Kunststoffverbundsysteme aus PMMA und TPU beschrieben, die eine hohe Reflektivität im IR-Bereich aufweisen. Wie aber auch in der DE 102004058083 lassen sich diese Ergebnisse nicht auf Polycarbonatzusammensetzungen übertragen.

In EP 0548822 werden Verbundsysteme, enthaltend Zusammensetzungen, enthaltend IR-reflektierende Teilchen, beschrieben. Diese Verbundsysteme enthalten Schichten mit einem hohen Anteil an Titandioxid. Diese Verbundsysteme sind nicht Gegenstand der vorliegenden Anmeldung.

In WO 2011/038842 A1 werden Polycarbonatzusammensetzungen, enthaltend Phosphate zur Stabilisierung UV-Absorber haltiger Polycarbonate beschrieben. Aus der Eignung zur Stabilisierung von UV-Absorber haltigem Polycarbonat kann nicht abgeleitet werden, dass solche Stabilisatoren auch IR-reflektierende Pigment-haltige Zusammensetzungen stabilisieren können.

In EP 1857424 A1 beschreibt farbige Zwischenfolien für Verbundglas, welche IR-Strahlung gut reflekterien. Basis der Schicht ist ein Polyvinylacetalharz. Die beschriebenen Zusammensetzungen enthalten außerdem einen IR-Absorber. Zudem ist ein Phosphorsäureester genannt, u.a. auch Alkylphosphate.

### Aufgabenstellung:

Aufgabe der vorliegenden Erfindung war es somit, Polycarbonatformmassen zur Verfügung zu stellen, die eine hohe Reflexion im IR-Bereich und eine hohe Verarbeitungsstabilität sowie eine hohe Schmelzestabilität aufweisen.

Desweiteren zeigen die Formmassen und daraus hergestellten Bauteile einen guten Schwarzeindruck, der bei vielen Anwendungen im Automobilbereich (Dächer, Blenden) oder im Unterhaltungselektoronikbereich (TV-Rahmen) gefordert ist. Insbesondere ist ein hoher Tiefenschwarzeindruck bzw. ein glasartiger Tiefenglanzeffekt erwünscht.

Bei Anwendungen im Außenbereich ist zudem eine hohe Bewitterungsfestigkeit erforderlich.

Eine weitere Aufgabe der vorliegenden Erfindung war es, ein Verfahren zur Herstellung von thermoplastischen Mehrschichtkörpern mit den oben beschriebenen Eigenschaften bereitzustellen.

Ein weiterer Aspekt der vorliegenden Erfindung ist die wirtschaftlich konkurrenzfähige Bereitstellung von IR-reflektierenden Zusammensetzungen mit den erfindungsgemäßen Eigenschaften.

Die Zusammensetzungen weisen eine Reflexion im IR-Bereich zwischen größer 780 und 2300 nm von mindestens 20, bevorzugt 30 % auf.

Ferner haben die Zusammensetzungen und Bauteile eine geringe Transmission im sichtbaren Bereich (Lichttransmission), bevorzugt keine Transmission im sichtbaren Bereich. Diese Zusammensetzungen sollen somit im Fertigteil gedeckt eingefärbte Körper ergeben.

Der T_{DS}-Wert ist bevorzugt kleiner als 5 %, insbesondere bevorzugt kleiner als 2 %.

### Lösung:

Es wurde gefunden, dass Zusammensetzungen gemäß Anspruch 1 der vorliegenden Erfindung die Aufgabe lösen.

Die erfindungsgemäße Zusammensetzung enthält die folgenden Komponenten:
a) Polycarbonat bzw. Copolycarbonat und Mischungen daraus, wobei dieses thermoplastische Polymer in einer Menge zugegeben wird, dass diese mit den Komponenten b) bis c), bzw. b) bis h) 100 Gew.-% ergibt;
b) mindestens ein IR-reflektierendes anorganisches Pigment, ausgewählt aus der Gruppe, bestehend aus:
   - Chrom-Eisenoxid (CAS-Nr. 12737-27-8), (Fe,Cr)₂O₃
   - Pigment Blau 28 Cobaltaluminat Blau Spinell (CAS-Nr. 1345-16-0)
   - Pigment Blau 36 Cobaltchromit Blau Spinell (CAS-Nr. 68187-11-1)
   - sowie Mischungen daraus,
   in Mengen von 0,35 - 4,00 Gew.-%, bevorzugt von 0,4 - 3,0 Gew.-% und ganz besonders bevorzugt von 0,5 - 2,5 Gew.-%;
c) mindestens einen Stabilisator oder ein Verarbeitungshilfsmittel auf Phosphatbasis in einem positiven Anteil von weniger als 0,05 Gew.-%. Das Phosphat hat dabei die folgende Struktur (1) 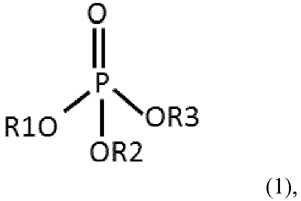
wobei R1 bis R3 H, gleiche oder unterschiedliche linerare, verzweigte oder zyklische Alkylreste sind. Besonders bevorzugt sind C₁- bis C₁₃ Alkylreste. C₁- bis C₁₈-Alkyl steht beispielsweise für Methyl, Ethyl, n-Propyl, iso-Propyl, n-Butyl, sec-Butyl, tert-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder l-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäsßgeeignete Alkylphosphate sind z. B. Mono-, Di- und Trihexylphosphat, Triisooctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Die verwendeten Alkylphosphate werden in Mengen von weniger als 0,05 Gew.-%, bevorzugt von 0,00005 Gew.-% bis 0,05000 Gew.-%, besonders bevorzugt 0,0002 bis 0,05 Gew.-%, ganz besonders bevorzugt von 0,0005 Gew.-% bis 0,03 Gew.-% und in einem sehr bevorzugtem Fall von 0,001 bis 0,0120, bezogen auf das Gesamtgewicht der Zusammensetzung eingesetzt.

Außerdem sind ggf. die weiteren Komponenten enthalten:
d) optional 0,0 Gew.-% bis 1,0 Gew.-%, bevorzugt 0,01 Gew.-% bis 0,50 Gew.-%, besonders bevorzugt 0,01 Gew.-% bis 0,40 Gew.-% ein oder mehrere Entformer, bezogen auf das Gesamtgewicht der Zusammensetzung;
e) optional 0,0 Gew.-% bis 20,00 Gew.-%, bevorzugt 0,05 Gew% bis 10,00 Gew.-%, weiter bevorzugt 0,10 Gew.-% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber, bezogen auf das Gesamtgewicht der Zusammensetzung;
f) optional 0,00 Gew.-% bis 0,20 Gew.-% ein oder mehrere Thermo- bzw. Verarbeitungsstabilisatoren verschieden von c), bezogen auf das Gesamtgewicht der Zusammensetzung, bevorzugt ausgewählt aus der Gruppe der Phosphine, Phosphite und phenolischen Antioxidantien sowie deren Mischungen, wobei
in einer speziellen Ausführungsform der vorliegenden Erfindung 0,01 Gew.-% bis 0,05 Gew.-%, bevorzugt 0,015 Gew.-% bis 0,040 Gew.-% an Thermo- bzw. Verarbeitungsstabilisatoren eingesetzt werden;
g) optional 0,0 Gew.-% bis 5,0 Gew.-%, bevorzugt 0,01 Gew.-% bis 1,00 Gew.-% ein oder mehrere weitere Additive, bezogen auf das Gesamtgewicht der Zusammensetzung,
h) optional 0,0 Gew.-% bis 1,0 Gew.-%, bevorzugt 0,01 bis 1,0 Gew.-% und besonders bevorzugt von 0,02 bis 0,50 Gew.-% eines oder mehrerer im IR-Bereich transparenter Farbmittel.

In einer bevorzugten Ausführungsform besteht die Zusammensetzung aus den Komponenten a)- c), weiter bevorzugt a) - h).

In einer bevorzugten Ausführungsform ist die Polymerzusammensetzung frei von Ruß.

In einer alternativen bevorzugten Ausführungsform ist die Polymerzusammensetzung frei von TiO₂.

In einer weiteren bevorzugten Ausführungsform ist die Polymerzusammensetzung frei von IR-Absorbern, insbesondere anorganischen IR-Absorbern wie z.B. Lanthanboriden, Wolframaten, Antimonoxid- oder Antimonzinnoxid basierten Systemen.

In einer besonderen Ausführungsform werden die aus den erfindungsgemäßen Zusammensetzungen erhaltenen Formkörper lackiert, um einen glasartigen Tiefenglanzeffekt zu erreichen und ggf. eine höhere Witterungsbeständigkeit zu erreichen.

Die in der vorliegenden Beschreibung genannten bevorzugten Ausführungsformen können jeweils einzeln oder auch in beliebiger Kombination vorliegen.

Die aus den erfindungsgemäßen Zusammensetzungen erhaltenen Formkörper weisen eine deutlich höhere IR-Reflexion als herkömmliche dunkel bzw. schwarz eingestellte Zusammensetzungen aus Polycarbonat, welche häufig Ruß oder andere Farbmittel enthalten, auf.

Die erfindungsgemäßen Polycarbonat-Formmassen, bzw. daraus hergestellte Formkörper und Bauteile weisen eine deutlich geringere Erwärmung bei Einstrahlung von Sonnenlicht auf bei gleichbleibend guten mechanischen und physikalischen Eigenschaften.

Die erfindungsgemäße Zusammensetzung enthält mindestens einen speziellen Stabilisator auf Phosphatbasis. Es war überraschend, dass ausschließlich spezielle Additive auf Phosphatbasis als geeignet befunden wurden, wohingegen die dem Fachmann für Polycarbonat geläufigen Stabilisatoren auf Basis von phenolischen Antioxidantien oder Antioxidantien auf Phosphitbasis oder Phosphinbasis keine Wirkung zeigten.

Ein Vorteil der erfindungsgemäßen Zusammensetzungen und Bauteile ist Ihre geringere Wärmeabsorption mit damit verbundener geringerer thermischer Ausdehnung, was Passgenauigkeit und Toleranzen insbesondere bei größeren Bauteilen (Rahmen und Blenden) erhöht.

### Komponente a)

Geeignete thermoplastische Materialien zur Herstellung der erfindungsgemäßen Kunststoffzusammensetzung sind Polycarbonate Bezüglich der Polycarbonate sind alle bekannten Polycarbonate geeignet. Dies schließt Homopolycarbonate und Copolycarbonate ein.

Als Blendpartner eignen sich auch kautschukmodifizierte Vinyl(co)polymerisate und/oder weitere Elastomere.

Die geeigneten Polycarbonate haben bevorzugt mittlere Molekulargewichte M̅_{w} von 10.000 bis 50.000 g/mol, vorzugsweise von 14.000 bis 40.000 g/mol und insbesondere von 16.000 bis 32.000 g/mol, ermittelt durch Gelpermeationschromatographie mit Polycarbonateichung. Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964, S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (S.7, Z. 21 bis S. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

### Komponente b)

Komponente b) umfasst IR-reflektierende Pigmente, wobei folgendes Pigment bevorzugt ist:
- Chrom-Eisenoxid (CAS-Nr. 12737-27-8) (Fe,Cr)₂O₃, mit einer Dichte von ca. 5.2 g/cm3 und einem Schüttgewicht von ca. 0,70 g/cm3.

Bevorzugt mit einer Dichte von 5,2 g/cm³ und einer packing density von 0.78 kg/L sowie einem pH-Wert von ca. 8,8.

Desweiteren sind Produkte bekannt mit einer Dichte von 5,2 g/cm³ und einer packing density von 0.77 kg/L sowie einem pH-Wert von ca. 5,2 welche ebenfalls insbesonders bevorzugt sind.
- Pigment Blau 28 Cobaltaluminat Blau Spinell (CAS -Nr.1345-16-0)
- Pigment Blau 36 Cobaltchromit Blau Spinell (CAS-Nr. 1345-16-0)
- sowie Mischungen daraus.

Optional können weitere IR-reflektierende Pigmente wie Titandioxid eingesetzt werden.

### Komponente c)

Erfindungsgemäß geeignete Alkylphosphate sind die oben genannten Alkylphosphate, z. B. Mono-, Di- und Trihexylphosphat, Triisoctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

### Komponente d)

Die Zusammensetzung enthält bevorzugt Entformungsmittel auf Basis eines Fettsäureesters, bevorzugt eines Stearinsäureesters, insbesondere bevorzugt auf Pentaerythritbasis.

In einer besonderen Ausführungsform werden Pentaerythrittetrastearat (PETS) und/oder Glycerinmonostearat (GMS) eingesetzt.

### Komponente e)

Optional enthält die erfindungsgemäße Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

In einer besonders bevorzugten Ausführungsform enthält die erfindungsgemäße Zusammensetzung UV-Absorber.

Folgende Ultraviolett-Absorber sind dabei geeignet, wie z.B. Hydroxy-Benzotriazole, wie 2-(3',5'-Bis-(1,1-dimethylbenzyl)-2'-hydroxy-phenyl)-benzotriazol (Tinuvin® 234, BASF AG, Ludwigshafen), 2-(2'-Hydroxy-5'-(tert-octyl)-phenyl)-benzotriazol (Tinuvin® 329, BASF AG,. Ludwigshafen), 2-(2'-Hydroxy-3'-(2-butyl)-5'-(tert-butyl)-phenyl)-benzotriazol (Tinuvin® 350, BASF AG, Ludwigshafen), Bis-(3-(2H-benztriazolyl)-2-hydroxy-5-tert-octyl)methan, (Tinuvin® 360, BASF AG, Ludwigshafen), 2-(4,6-Diphenyl-1,3,5-triazin-2-yl)-5-(hexyloxy)-phenol (Tinuvin® 1577, BASF AG, Ludwigshafen), sowie die Benzophenone 2,4-Dihydroxy-benzophenon (Chimasorb® 22, BASF AG, Ludwigshafen) und 2-Hydroxy-4-(octyloxy)-benzophenon (Chimassorb® 81, BASF AG, Ludwigshafen), 2-Propenoic acid, 2-Cyano-3,3-diphenyl-, 2,2-Bis[[(2-cyano-1-oxo-3,3-diphenyl-2-propenyl)oxy]-methyl]-1,3-propandiylester (9CI) (Uvinul® 3030, BASF AG, Ludwigshafen), 2-[2-Hydroxy-4-(2-ethylhexyl)oxy]phenyl-4,6-di(4-phenyl)phenyl-1,3,5-triazin (CGX UVA 006, BASF AG, Ludwigshafen) oder Tetra-ethyl-2,2'-(1,4-phenylen-dimethyliden)-bismalonat (Hostavin® B-Cap, Clariant AG).

Es können auch Mischungen dieser Ultraviolett-Absorber eingesetzt werden.

### Komponente f)

In einer bevorzugten Ausführungsform enthält die Polymerzusammensetzung weiterhin mindestens einen weiteren Thermo- bzw. Verarbeitungsstabilisator.

Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-tert-butyl-4-methylphenyl)pentaerythritol-diphosphit, Triphenylphosphin (TPP), Trialkylphenylphosphin, Bisdiphenylphosphinoethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit-3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

### Komponente g)

Bei den weiteren Additiven handelt es sich um übliche Polymeradditive, wie sie z.B. in EP-A 0 839 623, WO-A 96/15102, EP-A 0 500 496 oder "Plastics Additives Handbook", Hans Zweifel, 5th Edition 2000, Hanser Verlag, München beschrieben sind, wie z.B. Flammschutzmittel, Antistatika oder Fließverbesserer. Die bereits genannten Komponenten b) bis f) und h) sind in diesem Zusammenhang ausdrücklich ausgenommen.

Die obigen Mengenangaben beziehen sich jeweils auf die gesamte Polymer-Zusammensetzung.

### Komponente h)

Als Farbmittel gemäß Komponente h) eignen sich insbesondere Farbmittel auf Anthrachinonbasis, auf Perinonbasis, auf Phthalocyaninbasis oder solche, die von derartigen Strukturen abgeleitet sind. Besonders bevorzugte Farbmittel sind in WO 2012/080395 A1 beschrieben. Weiterhin können als Farbmittel Macrolex Violet 3R (CAS 61951-89-1; Solvent Violet 36), Macrolex Grün 5B (CAS 128-80-3; Solvent Green 3; C.I. 61565), Amaplast Gelb GHS (CAS 13676-91-0; Solvent Yellow 163; C:I: 58840), Macrolex Orange 3G (CAS 6925-69-5; Solvent Orange 60; C.I. 564100), , Macrolex Blau RR (CAS 32724-62-2; Solvent Blue 97; C.I. 615290); Keyplast Blau KR (CAS 116-75-6; Solvent Blue 104; C.I. 61568), Heliogen Blau-Typen (z.B. Heliogen Blau K 6911; CAS 147-14-8; Pigment Blue 15:1; C.I. 74160), Heliogen Grün Typen (wie z.B. Heliogen Grün K 8730; CAS 1328-53-6; Pigment Green 7; C.I. 74260) sowie Macrolex Grün G (CAS 28198-05-2; Solvent Green 28; C.I. 625580) eingesetzt werden.

Diese Farbmittel können dazu beitragen, den Schwarzeindruck zu verbessern. Da die IR-reflektierenden Pigmente häufig eine von Schwarz abweichende Eigenfarbe aufweisen, kann der Schwarzeindruck somit verbessert werden.

Im IR-Bereich transparente Farbmittel werden bevorzugt in einer Mischung von zwei Farbmitteln eingesetzt, die oft notwendig ist, um die Eigenfarbe der IR-reflektierenden Pigmente zu kompensieren.

Die Zusammensetzung muss unter den für Thermoplaste üblichen Temperaturen, d.h. bei Temperaturen oberhalb von 300 °C, wie z.B. 350 °C verarbeitbar sein, ohne dass sich bei der Verarbeitung die optischen Eigenschaften, wie z.B. der Tiefenglanz, oder die mechanischen Eigenschaften deutlich verändern.

Die Herstellung von Formteilen, ausgehend von der erfindungsgemäßen Polymer-Zusammensetzung, enthaltend die oben genannten Komponenten, erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Dazu wird bevorzugt Polycarbonat mit ggf. weiteren Komponenten der Polymer-, bevorzugt der Polycarbonat-Formmasse, auf üblichen Schmelze-Mischaggregaten, wie z.B. auf Ein- oder Mehrwellen-Extrudern oder auf Knetern in der Schmelze, unter üblichen Bedingungen innig vermischt, extrudiert und granuliert. Sie können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone (diese "Aufschmelz- und Mischzone" wird nachfolgend auch als "Knet- und Aufschmelzzone" bezeichnet) und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, insbesondere bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

In einer besonderen Ausführungsform werden die aus der erfindungsgemäßen Zusammensetzung erhältlichen Formteile lackiert. Dabei ist folgender Schichtaufbau bevorzugt:
1) Mindestens auf einer Seite der Basisschicht, enthaltend die erfindungsgemäße Zusammensetzung, eine
   - Kratzfestbeschichtung auf Polysiloxanbasis, enthaltend
      i. mindestens einen UV-Absorber,
         wobei
      ii. die Dicke der Kratzfestschicht von 2 bis 15 µm, insbesondere bevorzugt von 4,0 bis 12,0 µm, beträgt.
2) optional, in einer besonderen Ausführungsform, mindestens eine auf der Basisschicht angeordnete haftvermittelnde Schicht (Primerschicht) zwischen der Basisschicht und der Kratzfestschicht, enthaltend
   i. mindestens einen UV-Absorber,
      wobei
   ii. die Dicke der Primerschicht 0,3 bis 8 µm, insbesondere bevorzugt 1,1 bis 4,0 µm, beträgt.
      In einer weiteren bevorzugten Ausführungsform sind auf beiden Seiten der Basisschicht eine haftvermittelnde Schicht sowie eine Kratzfestschicht aufgetragen.

Das Verfahren zur Herstellung von Formteilen aus den Polycarbonatzusammensetzungen umfasst die Herstellung eines Compounds, enthaltend Polycarbonat und die oben beschrieben Additive, die Herstellung eines entsprechenden Formteils sowie ggf. die Beschichtung des Formteils in einem ein- bzw. einem zweistufigen Beschichtungsprozesses.

Der Prozess zur Herstellung eines entsprechenden Formteils kann wie folgt ausgestaltet sein:
I. Herstellung eines Compounds aus den Komponenten b) und c) und Polycarbonat mit einer
   MVR von 6 cm³/(10 min) bis 35 cm³/(10 min), bevorzugt von 6 cm³/(10 min) bis 25 cm³/(10 min) weiter bevorzugt 9 bis 21 cm³/(10 min) nach ISO 1133 (bei 300 °C und 1,2 kg Belastung), enthaltend optional einen weiteren Thermostabilisator, und
   0,1 bis 0,5 Gew.-%, insbesondere bevorzugt von 0,2 bis 0,45 Gew.-% an PETS.
II. Herstellung eines Formteils aus I. in entsprechender Formteilgeometrie,
   vorzugsweise bei einer Werkzeugtemperatur von 60 - 150°C.
III. Beschichtung des Formteils im Flutverfahren mit einer Primerlösung, enthaltend
   a) organisches Bindematerial, das eine Haftvermittlung zwischen PC und einem polysiloxanbasierten 5 Lack ermöglicht,
   b) mindestens einen UV-Absorber,
   c) Lösemittel,

   Ablüften des Bauteils für 10 - 60 min bei Raumtemperatur und Härtung für 5 min bis 60 min bei 100 - 135 °C.
IV. Beschichtung des Formteils mit einem Siloxanlack im Flutverfahren, enthaltend
   a) siliciumorganische Verbindungen der Formel RₙSiX₄₋ₙ (mit n von 1 bis 4), wobei R für aliphatische C₁- bis bis C₁₀-Reste, bevorzugt Methyl-, Ethyl-, Propyl-, Isopropyl-, Butyl- und Isobutyl-, sowie Arylreste, bevorzugt Phenyl, und substituierte Arylreste steht und X für H, aliphatische C₁- bis C₁₀-Reste, bevorzugt Methyl-, Ethyl-, Propyl-, Isopropyl-, Butyl- und Isobutyl-, sowie Arylreste, bevorzugt Phenyl, substituierte Arylreste, für OH, Cl steht oder partielle Kondensate derselben.
   b) anorganische feinteilige Verbindung, bevorzugt SiO₂,
   c) ein Lösemittel auf Alkoholbasis,
   d) mindestens einen UV-Absorber,

Ablüften des Bauteils für 10 - 60 min bei Raumtemperatur und Härtung für 10 min bis 120 min bei 100 - 140 °C.

Das Formteil dient bevorzugt zur Verwendung als Blende im Automobilbereich, z.B. als Blendenverkleidung für A, B, oder C-Säulen oder als U-, O-förmige bzw. Rechteck-förmige Einfassung für z.B. Glaselemente im Dachbereich. Auch Zierblenden sind umfasst. Ferner sind Zwischenstücke, die Glaseinheiten optisch verbinden, gemeint. Ebenso Zwischenstücke zwischen A- und B-Säule. Ferner sind diese Formteile für Multimediagehäuse, wie z.B. Fernsehrahmen geeignet. Weitere Anwendungsgebiete bestehen im Bereich des Architectural Glazings, z.B. bei Gebäudeverkleidungen, Fensterrahmen, Dachpaneelen etc.

Im Schritt II des Verfahrens können die Zusammensetzungen beispielsweise durch Heißpressen, Spinnen, Blasformen, Tiefziehen, Extrudieren oder Spritzgießen in den erfindungsgemäßen Formkörper überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren, einschließlich Mehrkomponentenspritzguss und Spritzprägeverfahren.

Zur Herstellung von ein- und mehrkomponentigen Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgießteilen verwendet, bei welchen kurze Fließwege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig nachdem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 140 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse.

Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP 0570165 oder WO 2008/071363 oder DE 2804283 beschrieben. Kommerziell erhältliche Hybrid-Systeme sind z.B. unter den Namen PHC 587, PHC 587C oder UVHC 3000 von Momentive Performance Materials erhältlich.

In einem besonders bevorzugten Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei können die Bauteile sowohl hängend als auch in einem entsprechenden Warenträger gelagert beschichtet werden.

Bei größeren und/oder 3D-Bauteilen wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Mehrschichtkörper lassen sich besonders bevorzugt als Rahmen für Scheiben-Module für Automobile, Schienen- und Luftfahrzeuge einsetzen. Auch andere Rahmenteile sind bevorzugt.

Die erfindungsgemäßen Mehrschichtkörper sind z.B. für schwarze Blenden, welche für Außenanwendungen im Kfz-Bereich vorgesehen sind, geeignet. Diese transparenten Elemente können z.B. Glaselemente wie Scheiben bzw. Schiebedächer oder Scheinwerfer umfassen bzw. einrahmen. Durch die schwarze Tiefenglanzoptik wirkt der Scheibenbereich vergrößert, da das Dach, wie z.B. ein Panoramadach, als Vollglasoptik erscheint. Auch Zierblenden können aus diesem Material gefertigt werden. Ferner sind Zwischenstücke, die Glaseinheiten optisch verbinden, gemeint, ebenso Zwischenstücke zwischen A- und B-Säule im Automobilbereich.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Schmelzvolumenrate:

Die Bestimmung des Schmelzvolumenrate (MVR) erfolgt nach ISO 1133 und unter den in den Tabellen beschriebenen Bedingungen.

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

Es wurden jeweils 3 Musterplatten vermessen und der entsprechende Mittelwert aus den 3 Platten als durchschnittliche Oberflächenfehlerrate gewertet. Die Messung erfolgte an einer unbeschichteten Musterplatte.

Der sichtbare Bereich des Lichts (sichtbare Strahlung) umfasst den Bereich mit einer Wellenlänge von 380 - 780 nm, der IR-Bereich den Bereich von größer 780 nm bis 2300.

Bestimmung des TDS-Wertes (Solar Direct Transmittance) und des RDS-Wertes (Solar Direct Reflectance):
Die Transmissions- und Reflexionsmessungen wurden an einem Lambda 900 Spektralphotometer der Firma Perkin Elmer mit Photometerkugel durchgeführt. Alle Werte wurden bei Wellenlängen von 320 nm bis einschließlich 2300 nm mit Δλ 5nm bestimmt.

Die Berechnung der "Solar Direct Transmittance" TDS und der "Solar Direct Reflectance" RDS wurde nach ISO 13837, computational convention "A" durchgeführt.

### Schwarzeindruck:

Der Schwarzeindruck wird als ausreichend angesehen, wenn bei visueller Abmusterung die Probe schwarz erscheint, ohne dass der Hintergrund zu erkennen ist und die Transmission bei 780 nm an einer 2 mm starken Musterplatte geringer als 0,01 % ist (Messung der Transmission siehe oben).

Materialien zur Herstellung der Probekörper:
- Lineares Bisphenol-A-Polycarbonat Granulat mit Endgruppen, basierend auf Phenol mit einer MVR von 9,5 cm³/10 min, gemessen bei 300 °C und 1,2 kg Belastung (gemäß ISO 1033), enthaltend keine weiteren Additive, nachfolgend als "PC 1" bezeichnet.
- Lineares Bisphenol-A-Polycarbonat Pulver mit Endgruppen, basierend auf Phenol mit einer MVR von 6 cm³/10 min, gemessen bei 300 °C und 1,2 kg Belastung (gemäß ISO 1033), enthaltend keine weiteren Additive, nachfolgend als "PC 2" bezeichnet.
- Lineares Bisphenol-A-Polycarbonat mit Endgruppen, basierend auf Phenol mit einem MVR von 12 cm³/10 min, gemessen bei 300 °C und 1,2 kg Belastung (gemäß ISO 1033), enthaltend Triphenylphosphin sowie UV-Absorber auf Benzotriazol-Basis und Entformungsmittel Pentaerythrittetrastearat (CAS-Nr. 115-83-3), nachfolgend als "PC 3" bezeichnet. PC 3 enthält zusatzlich 100 ppm Triisooctylphosphat.
- Als erfindungsgemäßen Stabilisator auf Phosphatbasis wird Triisooctylphosphat (Tris-2-ethylhexyl-phosphat; CAS-Nr. 78-42-2) (TOF) der Firma Lanxess (51369 Leverkusen; Deutschland) verwendet.
- Als nicht-erfindungsgemäßer Stabilisator wird Irgafos 168 (Tris-(2,4-di-tert-butylphenyl)phosphit; CAS-Nr. 31570-04-4) und hierdas Produkt der Firma BASF (67056 Ludwigshafen, Deutschland) verwendet
- Als erfindungsgemäßes IR-reflektierendes Pigment auf Eisen-Chromoxid-Basis (Pigment Brown 29; CAS-Nr. 12737-27-8) wird das Produkt Sicopal Black K 0095 der Firma BASF (67056 Ludwigshafen, Deutschland) verwendet.
- Als weiteres IR-reflektierendes Pigment auf Chromoxidgrün-Basis (Pigment Green 17; CAS-Nr. 68909-79-5) wird das Produkt Black 10P922 der Firma Shepherd (B-9230 Wetteren, Belgien) verwendet.
- Als weiteres IR-reflektierendes Pigment auf Chromoxidgrün-Basis (Pigment Green 17; CAS-Nr. 68909-79-5) wird das Produkt Black 30C940 der Firma Shepherd (B-9230 Wetteren, Belgien) verwendet.
- Als nicht-erfindungsgemäßes IR-reflektierendes Pigment auf Chrom-Eisen-Nickel-Spinell Basis (Pigment Black 30; CAS-Nr. 71631-15-7)wird das Produkt Black 376A der Firma Shepherd (B-9230 Wetteren, Belgien) verwendet.
- Als nicht-erfindungsgemäßes IR-reflektierendes Pigment auf Mangan-Ferrit-Spinell Basis (Pigment Black 26; CAS-Nr. 68186-94-7)wird das Produkt Black 444 der Firma Shepherd (B-9230 Wetteren, Belgien) verwendet.

### Herstellung der thermoplastischen Polymer-Zusammensetzungen durch Compoundierung:

Die Compoundierung der Polymer-Zusammensetzung erfolgte auf einem Zweiwellenextruder der Firma KraussMaffei Berstorff, TYP ZE25, bei einer Gehäusetemperatur von 260°C bzw. einer Masstemperatur von 270°C und einer Drehzahl von 100 Upm bei einem Durchsatz von 10 kg/h mit den in den Beispielen angegebenen Mengen an Komponenten.

### Herstellung der Prüfkörper:

Das Granulat wurden bei 120 °C für 5 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu optischen Rundplatten mit einem Durchmesser von 80 mm und einer Dicke von 2,0 mm verarbeitet.

**Tabelle 1: Polycarbonatzusammensetzungen mit IR-reflektierendem Pigment**

| | Beispiel 1 (Vergleich) | Beispiel 2 (erfindungsgem.) | Beispiel 3 (Vergleich) |
|---|---|---|---|
| PC 1 | 95 Gew.-% | 95 Gew.-% | 95 Gew.-% |
| Sicopal Black K 0095 | 1,50 Gew.-% | 1,50 Gew.-% | 1,50 Gew.-% |
| PC 2 | 3,50 Gew.-% | 3,49 Gew.-% | 3,47 Gew.-% |
| TOF | - | 0,01 Gew.-% | - |
| Irgafos 168 | - | - | 0,03 Gew.-% |

**Tabelle 2: Bestimmung der Schmelzestabilität (MVR) für die Beispiele 1 und 2**

| | Beispiel 1 (Vergleich) | Beispiel 2 (erfindungsgem.) | Beispiel 3 (Vergleich) |
|---|---|---|---|
| 300 °C; 5 min | 10,92 | 8,94 | 9,03 |
| 300 °C; 20 min | 12,95 | 9,00 | 9,72 |
| 300 °C; 30 min | 13,60 | 8,99 | 10,09 |
| 320 °C; 5 min | 21,26 | 15,38 | 16,24 |
| 320 °C; 20 min | 24,51 | 15,42 | 18,22 |
| 320 °C; 30 min | 25,50 | 15,61 | 19,62 |

Man erkennt, dass die erfindungsgemäße Zusammensetzung eine höhere Schmelzestabilität, insbesondere bei hohen Temperaturen, als das Vergleichsbeispiel aufweist. Überraschenderweise konnten die in DE 102006029613 genannten, für PMMA-basierte Zusammensetzungen geeigneten Rezepturen nicht auf Polycarbonat übertragen werden. In Polycarbonat herkömmlich eingesetzte Stabilisatoren, wie z.B. auf Phosphit-Basis, wie z.B. Tris-(2,4-di-tert-butylphenyl)phosphit (Irgafos 168), sind überraschenderweise weniger wirksam.

**Tabelle 3: Einstellungen mit weiteren IR-reflektierenden Pigmenten**

| | Beispiel 4 | Beispiel 5 | Beispiel 6 Vergleich | Beispiel 7 Vergleich |
|---|---|---|---|---|
| PC 3 | 95,0 | 95,0 | 95,0 | 95,0 |
| PC 2 | 4,0 | 4,0 | 4,0 | 4,0 |
| Shepherd Black 10P922 | 1,0 | - | - | - |
| Shepherd Black 30C940 | - | 1,0 | - | - |
| Shepherd Black 376A | - | - | 1,0 | - |
| Shepherd Black 444 | - | - | - | 1,0 |

**Tabelle 4: Optische Daten der Beispiele 2 bis 7**

| | Beispiel 2 | Beispiel 4 | Beispiel 5 | Beispiel 6 | Beispiel 7 |
|---|---|---|---|---|---|
| Ty (D65 10°) [%] | 0,0 | 0,0 | 0,0 | 0,0 | 0,0 |
| RDS [%] | 20,2 | 17,6 | 18,1 | 6,2 | 10,7 |
| TDS [%] | 0,2 | 1,3 | 1,3 | 0,0 | 0,4 |

Überraschenderweise zeigte sich, dass IR-Reflektierende Pigmente wie sie in DE 102004058083 oder in DE 102007061052 (Beispiel 6) als geeignet bzgl. IR-Reflexion beschrieben werden (und auch für PC als geeignet beschrieben werden), in Polycarbonat unwirksam, bezogen auf die IR-Reflexion, sind. Gleiches gilt für Pigmente, welche in WO2010037071 (Beispiel 7) als geeignet beschrieben werden.

Auch dieser Pigmenttyp ist überraschenderweise in Polycarbonat unwirksam. Dagegen weisen die Pigmenttypen aus Beispiel 2, 4 und 5 eine gute IR-Reflektivität auf.

**Tabelle 5: Bestimmung der Schmelzestabilität (MVR) für die Beispiele 4 bis 7**

| | Beispiel 4 | Beispiel 5 | Beispiel 6 | Beispiel 7 |
|---|---|---|---|---|
| 300 °C; 5 min | 11,624 | 11,545 | 37,269 | 12,996 |
| 300 °C; 20 min | 12,144 | 12,129 | 44,502 | 16,296 |
| 300 °C; 30 min | 12,621 | 12,300 | n.m.* | 17,877 |

| | | | | |
|---|---|---|---|---|
| *aufgrund zu geringer Viskosität nicht messbar | | | | |

Überraschenderweise zeigt sich, dass die Beispiele 6 und 7 im Vergleich zu 4 und 5 eine deutlich geringere Schmelzestabilität aufweisen. Eine Stabilisierung erwies sich hier überraschenderweise als unwirksam.

Anhand der Beispiele kann man deutlich erkennen, dass die Stabilisierung für einen Teil der IR-reflektierenden Pigmente wirksam und damit die entsprechenden Pigmente für den Einsatz in PC geeignet sind. Die speziell ausgewählten Pigmente und die Stabilisatorzusammensetzung waren zuvor nicht bekannt und konnte aus dem bestehenden Stand der Technik auch nicht abgeleitet werden. Damit sind nun dunkel-eingefärbte Polycarbonatzusammensetzungen bzw. deren Formteile mit hoher IR-Reflexion realisierbar.

Beispiele 4 und 5 sind nicht erfindungsgemäß.

**Tabelle 6: Polycarbonatzusammensetzung ähnlich zu Beispiel 2 - allerdings mit veränderter Konzentration an IR-reflektierendem Pigment**

| | Beispiel 8 Vergleich |
|---|---|
| PC 3 | 95,00 Gew.-% |
| PC 2 | 4,97 Gew.-% |
| Sicopal Black K0095 | 0,3 Gew.-% |

**Tabelle 7: Optische Eigenschaften (Beispiel 8)**

| | Beispiel 8 |
|---|---|
| Ty (D65 10°) [%] | 0,70 |
| RDS [%] | 16,9 |
| TDS [%] | 7,1 |

Eine geringe Konzentration an IR-reflektierenden Pigmenten (Beispiel 8) führt zu relativ hohen TDS-Werten (TDS >5). Dies war überraschend, da die Reflexion trotz der geringen Konzentration an IR-reflektierendem Pigment ähnlich hoch ist wie in Beispiel 2. Da eine Energietransmission unerwünscht ist, müssen spezielle Konzentrationen von IR-reflektierendem Pigment eingesetzt werden. Andere Maßnahmen, wie z.B. der Einsatz geringer Mengen an absorbierenden Pigmenten wie Ruß oder IR-Absorber (zur Reduktion des TDS-Wertes), vermindern die Reflexion drastisch und sind somit ungeeignet. Insofern erfüllen nur die erfindungsgemäßen Zusammensetzungen in speziellen Konzentrationen die Aufgabenstellung.

Alternativ lassen sich hohe Reflexionswerte dadurch erreichen, dass man einen speziellen Mehrschichtaufbau wählt. Hierzu kann man die erfindungsgemäßen Kunststoffformmassen mit Gehalten von weniger als 0,35 Gew.-% verwenden, wenn sich hinter dieser Kunststoffschicht eine weitere reflektierende Schicht wie eine Metallschicht befindet.

Dass die erhöhten Reflexionswerte mit einer niedrigeren Oberflächentemperatur einhergehen, konnte durch die folgenden Beispiele 9 und 10 gezeigt werden.

### Beispiel 9 und 10

Das Aufheizverhalten der Prüfkörper (optische Rundplatte mit einem Durchmesser von 80 mm und einer Dicke von 2,0 mm) wurde durch Bestrahlung mit einer 150 W Infrarotlampe (Infrared PAR 38E 150 W E27 230 V ICT; Philips; R95), angeordnet in einem Abstand von 30 cm über dem Prüfkörper, untersucht. Die Oberflächentemperatur wurde mit einem selbsklebenden Meßfühler (mittig angeordnet) detektiert. Die Umgebungstemperatur betrug 22 °C bei 33 % rel. Feuchte.

Es wurden die Anfangstemperatur und die Oberflächentemperatur nach 15 Minuten Bestrahlung detektiert.

| | Oberflächentemperatur Anfang | Oberflächentemperatur Ende |
|---|---|---|
| Bsp. 9 (Vergleich) Polycarbonat, enthaltend als Schwarzpigment 0,08 Gew.- % Ruβ | 22,5 °C | 73,5 °C |
| Beispiel 10 (erfindungsgemäß), enthaltend als Schwarz-pigment 1,0 Gew.-% Sicopal Black K 0095 und zusätzlich 0,01 Gew.-% TOF | 23,2 °C | 57,7 °C |

Man erkennt die deutlich niedrigere Oberflächentemperatur im Falle des Prüfkörpers mit erfindungsgemäßer Zusammensetzung gegenüber dem Vergleichsbeispiel.

## Patentansprüche

1. Polymerzusammensetzung mit hoher IR-Reflektivität, enthaltend:
a) Polycarbonat in einem Anteil, dass dieser mit den übrigen Komponenten 100 Gew.-% ergibt,
b) mindestens ein IR-reflektierendes Pigment,
ausgewählt aus der Gruppe, bestehend aus:
- Pigment Braun 29 Chrom-Eisenoxid (Fe, Cr)₂O3 mit der CAS-Nr. 12737-27-8,
- Pigment Blau 28 Cobaltaluminat Blau Spinell mit der CAS-Nr. 1345-16-0,
- Pigment Blau 36 Cobaltchromit Blau Spinell mit der CAS-Nr. 68187-11-1 und deren Mischungen,
in einem Anteil von 0,35 - 4,0 Gew.-%,
c) mindestens einen Stabilisator auf Phosphatbasis mit folgender Struktur (1) 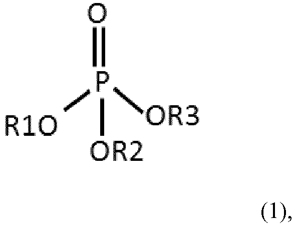
wobei R1 bis R3 H, gleiche oder unterschiedliche lineare, verzweigte oder zyklische Alkylreste sind, wobei c) in einem positiven Anteil von weniger als 0,05 Gew.-% vorliegt.

2. Zusammensetzung nach Anspruch 1, **dadurch gekennzeichnet, dass** sie folgende Komponenten d) - h) umfasst:
d) 0,0 Gew.-% bis 1,0 Gew.-% ein oder mehrere Entformer, bezogen auf das Gesamtgewicht der Zusammensetzung,
e) 0,0 Gew.-% bis 20,00 Gew.-% ein oder mehrere UV-Absorber, bezogen auf das Gesamtgewicht der Zusammensetzung,
f) 0,00 Gew.-% bis 0,20 Gew.-% ein oder mehrere Thermo- bzw. Verarbeitungsstabilisatoren verschieden von c), bezogen auf das Gesamtgewicht der Zusammensetzung,
g) 0,0 Gew.-% bis 5,0 Gew.-% ein oder mehrere weitere Additive, bezogen auf das Gesamtgewicht der Zusammensetzung,
h) 0,0 Gew.-% bis 1,0 Gew.-% ein oder mehrere im IR-Bereich transparente Farbmittel, bezogen auf das Gesamtgewicht der Zusammensetzung.

3. Zusammensetzung nach Anspruch 1 oder 2, **dadurch gekennzeichnet, dass** sie die Komponenten b) - h), jeweils bezogen auf das Gesamtgewicht der Zusammensetzung, umfasst in Anteilen von:
b) mindestens ein IR-reflektierendes Pigment in einem Anteil von 0,4 - 3,0 Gew.-%,
c) mindestens einen Stabilisator auf Phosphatbasis in einem Anteil von 0,00005 Gew.-% bis 0,05 Gew.-%,
d) 0,01 Gew.-% bis 0,50 Gew.-% ein oder mehrere Entformer, bezogen auf das Gesamtgewicht der Zusammensetzung,
e) 0,05 Gew.-% bis 10,00 Gew.-% ein oder mehrere UV-Absorber, bezogen auf das Gesamtgewicht der Zusammensetzung,
f) 0,01 Gew.-% bis 0,05 Gew.-% ein oder mehrere Thermo- bzw. Verarbeitungsstabilisatoren verschieden von c), bezogen auf das Gesamtgewicht der Zusammensetzung,
g) 0,01 Gew.-% bis 1,00 Gew.-% ein oder mehrere weitere Additive, bezogen auf das Gesamtgewicht der Zusammensetzung,
h) 0,01 bis 1,00 Gew.-% ein oder mehrere im IR-Bereich transparente Farbmittel, bezogen auf das Gesamtgewicht der Zusammensetzung.

4. Zusammensetzung nach einem der vorhergehenden Ansprüche, **dadurch gekennzeichnet, dass** das IR-reflektierenden Pigment Pigment Braun 29 Chrom-Eisenoxid mit der CAS-Nr. 12737-27-8 (Fe, Cr)₂O3 ist.

5. Zusammensetzung nach einem der vorhergehenden Ansprüche, **dadurch gekennzeichnet, dass** Komponente c) ausgewählt ist aus der Gruppe, die Mono-, Di- und Trihexylphosphat, Triisooctylphosphat und Trinonylphosphat umfasst.

6. Zusammensetzung nach einem der vorhergehenden Ansprüche, **dadurch gekennzeichnet, dass** Komponente c) Triisooctylphosphat ist.

7. Formteil, hergestellt aus einer der Zusammensetzungen nach einem der Ansprüche 1 bis 6.

8. Mehrschichtkörper, umfassend:
a) eine Substratschicht, bestehend aus einer Zusammensetzung nach einem der Ansprüche 1 bis 6,
b) mindestens eine Deckschicht aus
b1) einem transparenten thermoplastischen Material oder
b2) einem transparenten nicht-thermoplastischen Material.

9. Mehrschichtkörper nach Anspruch 8, **dadurch gekennzeichnet, dass** jeweils eine Deckschicht auf gegenüberliegenden Seiten angeordnet ist.

10. Mehrschichtkörper nach Anspruch 8 oder 9, **dadurch gekennzeichnet, dass** die Deckschicht unmittelbar mit der Substratschicht verbunden ist.

11. Mehrschichtkörper nach Anspruch 8 oder 9, **dadurch gekennzeichnet, dass** die Deckschicht mit der Substratschicht über eine Schicht c) verbunden ist.

12. Mehrschichtkörper nach einem der Ansprüche 8 bis 11, **dadurch gekennzeichnet, dass** die Deckschicht eine SiO₂-basierte Kratzfestschicht ist.

13. Mehrschichtkörper nach einem der Ansprüche 8 bis 11, **dadurch gekennzeichnet, dass** die Basisschicht mit einem Siloxanlack im Flutverfahren als Deckschicht beschichtet ist.

## Claims

1. Polymer composition with high IR reflectivity, comprising:
a) content of polycarbonate that, with the other components, gives 100% by weight,
b) content of from 0.35 to 4.0% by weight of at least one IR-reflective pigment selected from the group consisting of:
- Pigment Brown 29 chromium iron oxide (Fe,Cr)₂O₃ with the CAS no. 12737-27-8,
- Pigment Blue 28 cobalt aluminate blue spinel with the CAS no. 1345-16-0,
- Pigment Blue 36 cobalt chromite blue spinel with the CAS no. 68187-11-1
and mixtures of these,
c) at least one phosphate-based stabilizer having the following structure (1) 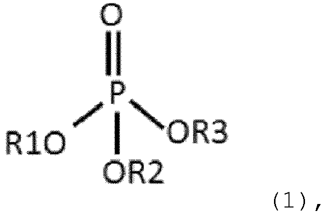
where R1 to R3 are H, or identical or different linear, branched, or cyclic alkyl moieties, where the content of c) is greater than zero and less than 0.05% by weight.

2. Composition according to Claim 1, **characterized in that** it comprises the following components d)-h):
d) from 0.0% by weight to 1.0% by weight of one or more mold-release agents, based on the total weight of the composition,
e) from 0.0% by weight to 20.00% by weight of one or more UV absorbers, based on the total weight of the composition,
f) from 0.00% by weight to 0.20% by weight of one or more heat stabilizers and/or processing stabilizers different from c), based on the total weight of the composition,
g) from 0.0% by weight to 5.0% by weight of one or more other additives, based on the total weight of the composition,
h) from 0.0% by weight to 1.0% by weight of one or more colorants transparent in the IR region, based on the total weight of the composition.

3. Composition according to Claim 1 or 2, **characterized in that** it comprises the following contents of components b)-h), based in each case on the total weight of the composition:
b) content of from 0.4 to 3.0% by weight of at least one IR-reflective pigment,
c) content of from 0.00005% by weight to 0.05% by weight of at least one stabilizer based on phosphate,
d) from 0.01% by weight to 0.50% by weight of one or more mold-release agents, based on the total weight of the composition,
e) from 0.05% by weight to 10.00% by weight of one or more UV absorbers, based on the total weight of the composition,
f) from 0.01% by weight to 0.05% by weight of one or more heat stabilizers and/or processing stabilizers different from c), based on the total weight of the composition,
g) from 0.01% by weight to 1.00% by weight of one or more other additives, based on the total weight of the composition,
h) from 0.01% by weight to 1.00% by weight of one or more colorants transparent in the IR region, based on the total weight of the composition.

4. Composition according to any of the preceding claims, **characterized in that** the IR-reflective pigment is Pigment Brown 29 chromium iron oxide with the CAS no. 12737-27-8 (Fe, Cr)₂O₃.

5. Composition according to any of the preceding claims, **characterized in that** component c) is selected from the group comprising mono-, di-, and trihexyl phosphate, triisooctyl phosphate, and trinonyl phosphate.

6. Composition according to any of the preceding claims, **characterized in that** component c) is triisooctyl phosphate.

7. Molding produced from one of the compositions according to any of Claims 1 to 6.

8. Multilayer structure comprising:
a) a substrate layer composed of a composition according to any of Claims 1 to 6,
b) at least one outer layer made of
b1) a transparent thermoplastic material or
b2) a transparent non-thermoplastic material.

9. Multilayer structure according to Claim 8, **characterized in that** the arrangement has an outer layer on each of the opposite sides.

10. Multilayer structure according to Claim 8 or 9, **characterized in that** the outer layer is directly bonded to the substrate layer.

11. Multilayer structure according to Claim 8 or 9, **characterized in that** the outer layer is bonded by way of a layer c) to the substrate layer.

12. Multilayer structure according to any of Claims 8 to 11, **characterized in that** the outer layer is an SiO2-based scratch-resistant layer.

13. Multilayer structure according to any of Claims 8 to 11, **characterized in that** the base layer has been coated with a siloxane lacquer as outer layer by the flow-coating process.

## Revendications

1. Composition polymère à réflectivité IR élevée, contenant :
a) un polycarbonate en une proportion qui permet à celle-ci d'atteindre 100 % en poids avec les autres composants,
b) au moins un pigment réfléchissant l'IR,
choisi dans le groupe constitué par :
- le pigment brun 29 d'oxyde de chrome et de fer (Fe, Cr)₂O3 de n° CAS 12737-27-8,
- le pigment bleu 28 d'aluminate de cobalt bleu spinelle de n° CAS 1345-16-0,
- le pigment bleu 36 de chromite de cobalt bleu spinelle de n° CAS 68187-11-1,
et leurs mélanges,
en une proportion de 0,35 à 4,0 % en poids,
c) au moins un stabilisateur à base de phosphate ayant la structure (1) suivante : 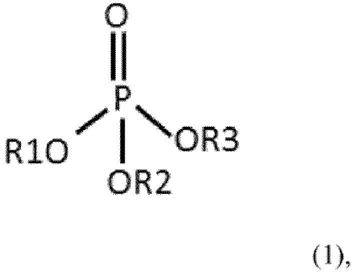
dans laquelle R1 à R3 représentent H, des radicaux alkyle linéaires, ramifiés ou cycliques identiques ou différents, c) étant présent en une proportion positive de moins de 0,05 % en poids.

2. Composition selon la revendication 1, **caractérisée en ce qu'**elle comprend les composants d) à h) suivants :
d) 0,0 % en poids à 1,0 % en poids d'un ou de plusieurs agents de démoulage, par rapport au poids total de la composition,
e) 0,0 % en poids à 20,00 % en poids d'un ou de plusieurs absorbeurs UV, par rapport au poids total de la composition,
f) 0,00 % en poids à 0,20 % en poids d'un ou de plusieurs stabilisateurs thermiques ou d'usinage différents de c), par rapport au poids total de la composition,
g) 0,0 % en poids à 5,0 % en poids d'un ou de plusieurs additifs supplémentaires, par rapport au poids total de la composition,
h) 0,0 % en poids à 1,0 % en poids d'un ou de plusieurs colorants transparents dans la plage IR, par rapport au poids total de la composition.

3. Composition selon la revendication 1 ou 2, **caractérisée en ce qu'**elle comprend les composants b) à h), à chaque fois par rapport au poids total de la composition, en proportions de :
b) au moins un pigment réfléchissant l'IR en une proportion de 0,4 à 3,0 % en poids,
c) au moins un stabilisateur à base de phosphate en une proportion de 0,00005 % en poids à 0,05 % en poids,
d) 0,01 % en poids à 0,50 % en poids d'un ou de plusieurs agents de démoulage, par rapport au poids total de la composition,
e) 0,05 % en poids à 10,00 % en poids d'un ou de plusieurs absorbeurs UV, par rapport au poids total de la composition,
f) 0,01 % en poids à 0,05 % en poids d'un ou de plusieurs stabilisateurs thermiques ou d'usinage différents de c), par rapport au poids total de la composition,
g) 0,01 % en poids à 1,00 % en poids d'un ou de plusieurs additifs supplémentaires, par rapport au poids total de la composition,
h) 0,01 % en poids à 1,00 % en poids d'un ou de plusieurs colorants transparents dans la plage IR, par rapport au poids total de la composition.

4. Composition selon l'une quelconque des revendications précédentes, **caractérisée en ce que** le pigment réfléchissant l'IR est le pigment brun 29 d'oxyde de chrome et de fer de n° CAS 12737-27-8 (Fe, Cr)₂O₃.

5. Composition selon l'une quelconque des revendications précédentes, **caractérisée en ce que** le composant c) est choisi dans le groupe comprenant le phosphate de mono-, di- et trihexyle, le phosphate de triisooctyle et le phosphate de trinonyle.

6. Composition selon l'une quelconque des revendications précédentes, **caractérisée en ce que** le composant c) est le phosphate de triisooctyle.

7. Pièce moulée, fabriquée à partir de l'une des compositions selon l'une quelconque des revendications 1 à 6.

8. Corps multicouche, comprenant :
a) une couche de substrat, constituée par une composition selon l'une quelconque des revendications 1 à 6,
b) au moins une couche de recouvrement constituée par b1) un matériau thermoplastique transparent ou b2) un matériau non thermoplastique transparent.

9. Corps multicouche selon la revendication 8, **caractérisé en ce qu'**une couche de recouvrement est agencée sur chacun des côtés opposés.

10. Corps multicouche selon la revendication 8 ou 9, **caractérisé en ce que** la couche de recouvrement est reliée directement avec la couche de substrat.

11. Corps multicouche selon la revendication 8 ou 9, **caractérisé en ce que** la couche de recouvrement est reliée avec la couche de substrat par le biais d'une couche c).

12. Corps multicouche selon l'une quelconque des revendications 8 à 11, **caractérisé en ce que** la couche de recouvrement est une couche résistante aux éraflures à base de SiO₂.

13. Corps multicouche selon l'une quelconque des revendications 8 à 11, **caractérisé en ce que** la couche de base est revêtue avec un vernis de siloxane en tant que couche de recouvrement dans le procédé d'inondation.
